(19) **Europäisches Patentamt / European Patent Office / Office européen des brevets**

(11) **EP 1 640 414 B1**

(12) **EUROPEAN PATENT SPECIFICATION**

(45) Date of publication and mention
of the grant of the patent:
**20.04.2011 Bulletin 2011/16**

(51) Int Cl.:
***C08L 21/00*** (2006.01)   ***B60C 1/00*** (2006.01)
***C08K 3/36*** (2006.01)   ***C08K 5/54*** (2006.01)

(21) Application number: **04746620.6**

(22) Date of filing: **29.06.2004**

(86) International application number:
**PCT/JP2004/009151**

(87) International publication number:
**WO 2005/000957 (06.01.2005 Gazette 2005/01)**

(54) **RUBBER COMPOSITION CONTAINING SILICA AND METHOD FOR PRODUCTION THEREOF**

KIESELSÄURE ENTHALTENDE KAUTSCHUKZUSAMMENSETZUNG UND HERSTELLUNGSVERFAHREN DAFÜR

COMPOSITION DE CAOUTCHOUC CONTENANT DE LA SILICE ET SON PROCEDE DE PRODUCTION

(84) Designated Contracting States:
**DE FR GB IT**

(30) Priority: **30.06.2003 JP 2003188331**
**22.08.2003 JP 2003298724**

(43) Date of publication of application:
**29.03.2006 Bulletin 2006/13**

(73) Proprietor: **Zeon Corporation**
**Tokyo 100-8246 (JP)**

(72) Inventors:
• **KARATO, Takeshi,**
**Zeon Corporation**
**Chiyoda-ku, Tokyo 1008246 (JP)**
• **HIKIDA, Kazuhiro,**
**Zeon Corporation**
**Chiyoda-ku, Tokyo 1008246 (JP)**
• **FUKAHORI, Takahiko,**
**Zeon Corporation**
**Chiyoda-ku, Tokyo 1008246 (JP)**
• **CHINO, Yoshihiro,**
**Zeon Corporation**
**Chiyoda-ku, Tokyo 1008246 (JP)**
• **WATANABE, Kazutaka,**
**Tokuyama Corporation**
**Yamaguchi 7458648 (JP)**

• **YATABE, Osamu,**
**Tokuyama Corporation**
**Yamaguchi 7458648 (JP)**
• **SUGIMURA, Tsunetoshi,**
**Tokuyama Corporation**
**Yamaguchi 7458648 (JP)**
• **TOKUNAGA, Shinji,**
**Tokuyama Corporation**
**Yamaguchi 7458648 (JP)**

(74) Representative: **Albrecht, Thomas**
**Kraus & Weisert**
**Patent- und Rechtsanwälte**
**Thomas-Wimmer-Ring 15**
**80539 München (DE)**

(56) References cited:
**EP-A- 1 321 488    FR-A- 2 588 008**
**GB-A- 992 770    JP-A- 5 096 538**
**JP-A- 2001 213 971**

• **DATABASE WPI Section Ch, Week 200201 Thomson Scientific, London, GB; Class A60, AN 2002-002253 XP002519830 & JP 2001 213971 A (TOKUYAMA CORP.) 7 August 2001 (2001-08-07)**
• **DATABASE WPI Section Ch, Week 199320 Thomson Scientific, London, GB; Class A18, AN 1993-163881 XP002519831 & JP 05 096538 A (JAPAN SYNTHETIC RUBBER CO., LTD.) 20 April 1993 (1993-04-20)**

**Description**

TECHNICAL FIELD

The present invention relates to a novel production method of a silica-containing rubber composition and particularly of a silica-containing rubber composition having excellent resistance to wearing and fuel efficiency, and preferably used for a tire tread.

BACKGROUND ART

As rubber reinforcing filler, carbon black and silica are conventionally widely used and, generally, a dry method for blending to rubber by using a Banbury mixer, kneader, and other kneading device has been widely applied. Comparing with a rubber composition filled with carbon black, a rubber composition filled with silica can be freely colored, causes less environmental contamination, and has superior resistance to tearing, furthermore, in recent years, it has been discovered to attain both of a high fuel efficiency and road holding property, and attentions have gathered as a tire tread rubber material. However, since silica is normally covered with a silanol group on its surface and has a strong self-condensation property, it has poor affinity for rubber and is hard to be preferably diffused in rubber.

Thus, to improve dispersibility of silica to diene rubber, a diene rubber composition obtained by a so-called wet method of mixing diene rubber latex and silica slurry and coagulating the rubber with silica has been proposed. For example, to uniformly mixing diene rubber latex and silica slurry, a method of using cationic organic surfactant, such as alkyltrimethylammonium salt, and a cationic resin (the U.S. Patent No. 4,482,657 and the Japanese Unexamined Patent Publication No. 2001-213971), a method of using an electrolytic solution containing a cationic substance and polyvalent metal salt (the Japanese Unexamined Patent Publication No. 2002-241507), are disclosed. Also, a method of mixing hydrophobic silica obtained by being subjected to silane coupling agent, and diene rubber latex or organic solvent solution of diene rubber, and co-coagulating has been disclosed (the Japanese Unexamined Patent Publication No. 10-231381).

However, while dispersing of silica to diene rubber becomes more preferable in the above methods comparing with the case of kneading mixture by a dry method, it takes energy and time for drying a rubber composition in a dehydrating and drying method applied in the subsequent step, furthermore, effects by improving reinforcing properties, resistance to wearing, fuel efficiency when used as tire tread, and road holding property on a wet pavement of an obtained diene rubber composition were not enough.

DISCLOSURE OF THE INVENTION

An object of the present invention is to provide a production method of a silica-containing rubber composition wherein dispersibility of silica is improved and a cross-linking molding of the rubber composition.

The present inventors have been committed themselves to study for solving the above technical issues, found that by making a moisture content of slurry of silica-containing rubber crumbs obtained by co-coagulating a mixture of rubber latex and silica to be a predetermined value or less by filtering, then, by using a silica-containing rubber composition obtained by dehydrating the same by using a specific dehydrator and drying, the mechanical strength, fuel efficiency and road holding property on a wet pavement when formed to be a tire are improved, and completed the present invention based on the knowledge.

According to the present invention, there is provided a production method of a silica-containing rubber composition, including a step (A) for mixing rubber latex and aqueous silica dispersions and obtaining a mixture of the rubber latex and silica; a step (B) for co-coagulating the rubber in the mixture and silica and obtaining slurry of silica-containing rubber crumbs; a step (C) for filtering the slurry and obtaining rubber crumbs having a moisture content of 80 wt% or less; a step (D) for dehydrating the filtered rubber crumbs by using a dehydrator having a compression function; and a step (E) of drying the dehydrated rubber crumbs.

In the production method of a silica-containing rubber composition of the present invention, an extruding machine having a barrel provided with a screw therein is preferably used as the dehydrator.

In the production method of a silica containing rubber composition of the present invention, preferably the filtered rubber crumbs are dehydrated after temporarily making an inner pressure of the barrel of the extruding machine higher than that at a normal operation.

In the production method of a silica-containing rubber composition of the present invention, preferably, a part or all of a crumb outlet of the extruding machine is temporarily blocked on an initial or middle stage of an operation of the extruding machine.

In the production method of a silica-containing rubber composition of the present invention, preferably, a part or all of the crumb outlet is blocked by filling substance in the extruding machine.

In the production method of a silica-containing rubber composition of the present invention, preferably, those including at least one of rubber, resin and ice are used as the filling substance.

In the production method of a silica-containing rubber composition of the present invention, preferably the dehydrated rubber crumbs are dried by a depressurizing operation or/and a heating operation.

In the production method of a silica-containing rubber composition of the present invention, preferably, the dehydrated rubber crumbs are dried by a compressing operation and a decompression operation.

BRIEF DESCRIPTION OF DRAWINGS

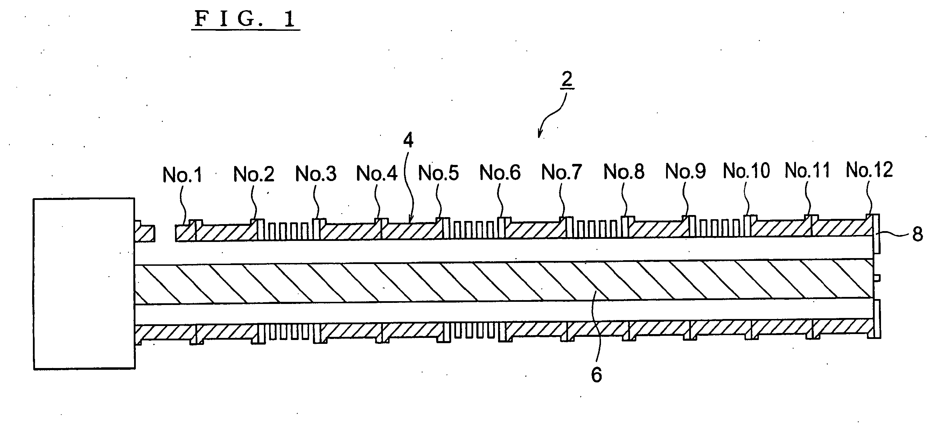

[FIG. 1] FIG. 1 is an explanatory view of a device for dehydrating and drying solid crumbs used in the present embodiment.

BEST MODE FOR CARRYING OUT THE INVENTION

(Silica-Containing Rubber Composition)

A silica-containing rubber composition is produced by filtering slurry of silica-containing rubber crumbs obtained by co-coagulating a mixture of rubber latex and silica to give a moisture content of 80 wt% or less, dehydrating by a dehydrator having a compression function, then, drying.

(Rubber)

Rubber used in the above rubber latex may be suitably selected in accordance with the intended use. Specifically, natural rubber, isoprene rubber, butadiene rubber, styrene-butadiene copolymer rubber, acrylonitrile-butadiene copolymer rubber, styrene-butadiene-isoprene copolymer rubber, butadiene-isoprene copolymer rubber, acrylonitrile-styrene-butadiene copolymer rubber and other diene rubber; chloroprene rubber; butyl rubber; and acrylic rubber, may be mentioned. The above rubber may include a hydroxyl group, a carboxyl group, an alkoxysilyl group, an amino group and an epoxy group. The rubber may be used alone or in combination of two or more kinds. Among these, particularly in the case of being used as a tire, it is preferable to use natural rubber, isoprene rubber, butadiene rubber, styrene-butadiene copolymer rubber and other diene rubber when considering tire performance, such as resistance to wearing and a fuel efficiency.

The above rubbers are obtained in a state of latex, organic solvent solution, slurry or solid, respectively by a method of an emulsion polymerization method, solution polymerization method, suspension polymerization method and vapor phase polymerization method. But in the present invention, other than those obtained in a state of latex can be made to be latex for use by the phase transfer method or by grinding and remelting. Among them, to effectively disperse silica, it is preferable to use latex obtained by an emulsion polymerization method.

When obtaining the above rubbers by emulsion polymerization, a well known emulsion polymerization method is sufficient, and an emulsifier and a polymerization initiator used in the emulsion polymerization may be well known ones. Also, as a molecular weight adjuster, for example, t-dodecylmercaptan, n-dodecylmercaptan and other mercaptans, carbon tetrachloride, thioglycolic acid, diterpene, terpinolene, $\gamma$-terpinenes, may be used.

The temperature of the emulsion polymerization may be suitably selected in accordance with a kind of a polymerization initiator to be used, but is normally 0 to 100°C, and preferably 0 to 60°C. The polymerization type may be either of continuous polymerization and batch-wise polymerization.

In terms of preventing gelatinization of a polymer, the polymerization conversion rate at the time of stopping the polymerization reaction is preferably 85 wt% or less, and more preferably in a range of 50 to 80 wt%. Polymerization reaction is normally stopped by adding a polymerization terminator to the polymerization mixture at a point of reaching to the above predetermined polymerization conversion rate. As a polymerization terminator, for example, diethylhydroxylamine, hydroxylamine and other amine-based compounds; hydroquinone, benzoquinone and other quinone-based compounds;.sodium nitrite, and sodiumdithiocarbamate, may be mentioned.

It is preferable to add an antioxidant to a reaction solution after stopping the polymerization reaction and before coagulation of latex. Particularly in the case of performing dehydrating and drying of rubber crumbs by using a later explained extruding machine having a barrel provided with a screw therein, it is preferable to add a necessary amount of an antioxidant in terms of preventing deterioration due to shearing. As an antioxidant, for example, 2,6-di-tert-butyl-4-methylphenol, octadecyl-3-(3',3'-di-tert-butyl-4-hydroxyphenyl)propionate, styrenated phenol and other phenolic antioxidants; 2,4-bis(octylthiomethyl)-6-methylphenol and other sulfuric antioxidants; N-(1,3-dimethylbutyl)-N'-phenyl-p-phenylenediamine and other amine antioxidants; 2,2,4-trimethyl-1,2-dihydroquinoline and other quinoline antioxidants; hydroquinone antioxidants; and phosphorous antioxidants, may be mentioned.

These antioxidants may be used alone or in combination of two or more kinds. An adding amount of the antioxidants is normally 0.05 to 10.0 parts by weight, preferably 0.08 to 6.0 parts by weight, more preferably 0.1 to 4.0 parts by weight with respect to 100 parts by weight of rubber. Also, a non-reacted monomer is preferably removed from the obtained latex in accordance with need after stopping the polymerization reaction.

A use amount of each monomer in emulsion polymerization is suitably selected, so that unit quantity of each monomer in the polymer becomes a desired content. When using styrene-butadiene copolymer rubber, styrene-butadiene-isoprene copolymer rubber, acrylonitrile-styrene-butadiene copolymer rubber and other styrene copolymer diene rubber, the styrene amount is 60 wt% or less, preferably 50 wt% or less. When using an acrylonitrile copolymer diene rubber, the acrylonitrile amount is 60 wt% or less, preferably 55 wt% or less. When the styrene amount or acrylonitrile amount is too large, an exothermic property becomes strong and low temperature embrittlement is caused.

The Mooney viscosity ($ML_{1+4}$, 100° C) of rubber used in the present invention is preferably in a range of 10 to 250, and more preferably in a range of 30 to 200.

In the present invention, extender oil may be mixed in rubber. As extender oil, those normally used in the rubber industry may be used, and paraffinic, aromatic and naphthenic petroleum softeners; plant-based softeners; and fat acids, may be mentioned. In the case of a petroleum softener, a content of polycyclic aromatic series is preferably less than 3%. The content is measured by the IP346 method (a test method of The Institute Petroleum in England).

(Silica)

Silica used in the present invention is not particularly limited. For example, fumed silica generally obtained by burning silicon tetrachloride in oxyhydrogen flame, wet silica obtained by neutralizing alkali silicate with acid, sol-gel process silica obtained by performing hydrolysis on silicon alkoxide, such as tetramethoxysilane and tetraethoxysilane, in acidic or alkalic hydrated organic solvent, colloidal silica obtained by dealkalizing an alkali silicate solution by performing electrodialysis on an alkali silicate solution, may be used. The silica may be used alone or in combination of two or more kinds. In the present invention, wet silica having excellent productivity is preferable, and precipitated silica obtained without going through gel is particularly preferable among that.

Among the above silica, those having a specific surface area measured by cetyltrimethylammonium bromide (CTAB) adsorption of 40 to 230 $m^2$/g are preferable, 50 to 180 $m^2$/g are more preferable, and 60 to 120 $m^2$/g are the most preferable.

Also, among the above silica, those having a specific surface area ($S_{BET}$) measured by nitride adsorption method of 50 to 250 $m^2$/g are preferable, 60 to 190 $m^2$/g are more preferable, and 70 to 140 $m^2$/g are the most preferable.

Furthermore, among the above silica, those having a dibutylphthalate oil absorption rate (hereinafter, simply referred to as an oil absorption rate) of 100 to 250 ml/100g are preferable, 110 to 210 ml/100g are more preferable, and 120 to 180 ml/100g are the most preferable.

In the present invention, when using silica having the above specific surface area and oil absorption rate, a silica-containing rubber composition to be obtained has excellent extension strength, resistance to wearing of a cross-linking molding, accordingly, exhibits excellent reinforcing properties and fuel efficiency when used as a tire.

Furthermore, an average particle diameter of silica is not particularly limited and may be suitably determined considering the intended use. Generally, a range of 0.1 to 50 $\mu$m is preferable. By making the average particle diameter to be 0.1 $\mu$m or more, dispersion defective due to self condensation of the silica can be prevented, and a silica-containing rubber composition to be obtained has excellent hardness. On the other hand, by making the average particle diameter 50 $\mu$m or less, dispersion of the silica in rubber becomes preferable, and sufficient reinforcing properties and fuel efficiency are obtained. Among that, when being used as a tire, the average particle diameter of the silica is preferably 1 $\mu$m to 30 $\mu$m.

Adjusting of particle diameters of silica is not particularly limited and a well known method may be used. For example, a dry grinding method for suitably adjusting to obtain intended particle diameters by using a jet mill, ball mill, high speed impact type pulverizer and micro mill; and a wet grinding method for suitably adjusting to obtain intended particle diameters by using a dispersion mill, a homogenizer, a high pressure homogenizer and a colloid mill, may be mentioned. Also, when adjusting particle diameters of silica by a wet grinding method, adjustment may be performed in water, an organic solvent or rubber latex or in a mixed solution of these.

(Cationic Substance)

A silica-containing rubber composition may further include a cationic substance on an object of improving dispersability of the silica. As the cationic substance, a cationic substance disclosed in the U. S. Patent No. 4,482,657, may be used but a cationic polymer is preferable in terms of workability when applying to dehydrating and drying method of the present invention, which will be explained later on.

A cationic polymer is not at all limited as far as it is a polymer, which exhibits cationic property by being electrolyzed when dissolved in water. Specifically, for example, a polymer including primary to tertiary amino groups and quaternary ammonium salt group in its polymer main chain or side chain is typical. As such a cationic polymer, for example, those obtained by polymerizing a monomer including primary to tertiary amino groups and their ammonium salt groups and quaternary ammonium salt group are preferably used. Furthermore, those obtained by copolymerizing other monomers in a range of not undermining the above effects may be used.

In the present invention, those obtained by polymerizing a monomer including tertiary and quaternary ammonium salt groups are particularly preferable in terms of reinforcing properties of a diene rubber composition to be obtained.

To specifically explain an example of a preferable cationic polymer in the present invention, polyethyleneimine, polyvinylamine, polyvinylpyridine, polyamine sulfone, polyarylamine, polydiarylmethylamine, polyamideamine, polyaminoarkyl acrylate, polyaminoalkyl methacrylate, polyaminoalkylacrylamide, polyepoxyamine, polyamide polyamine, polyester polyamine, dicyandiamide formalin condensate, polyalkylene polyamine dicyandiamide condensate, epichlorohydrin dialkylamine condensate, and ammonium salts of these, furthermore, polydiaryldimethyl ammoniumchloride, polymethacrylic acid ester methylchloride and other polymers including quaternary ammonium salt group may be mentioned. Among these, polyethyleneimine, polyarylamine, polydiarylmethylamine, polyepoxyamine, epichlorohydrin dialkylamine condensate and ammonium salts of these are particularly preferable.

A weight-average molecular weight of the above cationic polymers is preferably 1,000 to 1,000,000, more preferably 2,000 to 900,000, and most preferably 3,000 to 800,000. By making the above weight-average molecular weight 1,000 or more, reinforcing properties improving effects, such as extension strength and withstand to wearing, become stronger in silica-containing rubber composition to be obtained, while, by making the above weight-average molecular weight 1,000,000 or less, silica dispersability in the rubber becomes preferable.

A value of a cation equivalent weight molecular weight calculated by colloid titration of the above cationic polymer is preferably 200 or less, more preferably 180 or less, and most preferably 150 or less.

These cationic polymers may be used alone or in combination of two or more kinds. A blending quantity of these cationic substances in a rubber composition is 0.1 to 7.5 parts by weight, preferably 0.5 to 7 parts by weight, and more preferably 1 to 6 parts by weight with respect to 100 parts by weight of silica.

(Production Method)

In the present invention, the above mixture of rubber latex and silica is preferably those obtained by mixing rubber latex and aqueous silica dispersions. Also, it is preferable to coagulate rubber in the above rubber latex with silica in aqueous silica dispersions in terms of obtaining a silica-containing rubber composition with improved silica dispersability having excellent reinforcing properties and a fuel efficiency.

Namely, the production method of a silica-containing rubber composition of the present invention is characterized by including a step (A) for mixing rubber latex and aqueous silica dispersions and obtaining a mixture of the rubber latex and silica; a step (B) for co-coagulating the rubber in the mixture and silica and obtaining slurry of silica-containing rubber crumbs; a step (C) for filtering the slurry and obtaining rubber crumbs having a moisture content of 80 wt% or less; a step (D) for dehydrating the filtered rubber crumbs by using a dehydrator having a compression function; and a step (E) of drying the dehydrated rubber crumbs.

The step (A) is a step for mixing silica in the above rubber latex, characterized by making the silica to be aqueous dispersions to be mixed in the rubber latex. In the step (A), it is more preferable that aqueous dispersions of silica prepared by dispersing in water, for example, silica obtained by a neutralizing reaction of alkali silicate and acid in a slurry state or wet cake state without drying is mixed in rubber latex. In this way, by applying the method of dispersing silica in water without a drying step, selectivity of usable silica becomes wide and self condensation, due to heat contraction of the silica when being dried can be prevented, so that dispersability of the silica in the rubber can be improved.

When blending the above cationic substance in the above method,

(1) a method of mixing a cationic substance as it is or as a water solution after mixing rubber latex with aqueous silica dispersions, or a method of mixing rubber latex and aqueous silica dispersions in a cationic substance solution;

(2) a method of mixing silica and cationic substance in water to obtain aqueous dispersions and mixing rubber latex therein; and

(3) a method of mixing rubber latex, aqueous silica dispersions and cationic substance at a time; may be mentioned. Among them, the method (2) is the most preferable for it exhibits excellent elasticity in crumbs and dehydrating can be performed effectively by the method of the present invention.

Concentration of rubber in the above rubber latex is not particularly limited and may be suitably set in accordance with the object and use. It is normally in a range of 1 to 80 wt%, preferably 3 to 55 wt%, and particularly preferably 5 to 30 wt%. When in these ranges, control of crumb particle diameters, at the time of coagulation is easy.

In the above step (A), a blending quantity of the aqueous silica dispersions in the rubber latex is not particularly limited and may be suitably determined in accordance with the object and use. Silica weight with respect to 100 parts by weight of rubber in the rubber latex is preferably 10 to 120 parts by weight, more preferably 20 to 100 parts by weight, and most preferably 30 to 90 parts by weight. When in the above ranges, reinforcing properties and fuel efficiency of an obtained silica-containing rubber composition become preferable. While when being out of the ranges, crumbs to be obtained do not become a rubbery state and further becomes a paste when dehydrated by the method of the present invention, so that a dehydrating efficiency tends to decline.

Note that those having 1 to 40 wt% as the silica concentration in the above aqueous dispersions are normally preferably used. When in this range, fluidity of aqueous silica dispersions becomes preferable, controllability of co-coagulation is preferable and a homogenous silica-containing rubber composition can be obtained.

The step (B) is characterized by using a mixture of rubber latex and silica obtained in the step (A), and coagulating (co-coagulating) rubber in the rubber latex and silica together to obtain silica-containing rubber crumbs. By coagulating rubber while taking in silica in this way, dispersability of the silica in the rubber can be improved. In the step (B), a pH of the mixture at the time of coagulation is preferably 3.5 to 11.0. When an adding amount of the rubber latex is too much, the pH rises, so that the pH is preferably adjusted by adding acid and/or salt. As the acid and salt, sulfuric acid, phosphoric acid, hydrochloric acid and other inorganic acids; formic acid, acetic acid, butyric acid and other organic acids; aluminum sulfate, and other Lewis acids; and other acids, sodium chloride, calcium chloride and other salts, etc. may be mentioned.

When blending an extender oil in the rubber composition of the present invention, it is preferable to add oil emulsion obtained by emulsifying the extender oil into the mixture before starting coagulation, and it is more preferable to mix with the rubber latex in advance.

The coagulation temperature is preferably 10°C to 90°C, and more preferably 20°C to 80°C. A method of co-coagulation is not particularly limited and generally a method of mixing by using a general dispersing device, such as a propeller, dispersion mill and homogenizer, is applied.

The step (C) is characterized in that a slurry of the silica-containing rubber crumbs obtained in the step (B), that is, a mixture of crumbs (particles or blocks) of silica-containing rubber and coagulating solution (aqueous solution) is filtered with a sieve, to remove a part of the coagulating solution in advance, so that rubber crumbs having a moisture content after the filtration of 80 wt% or less, preferably 75 wt% or less and more preferably 65 wt% or less are obtained. By removing a part of the coagulating solution by filtering a slurry of the above silica-containing rubber crumbs to make the moisture content of the filtered crumbs to be a predetermined value or less, the dehydrating efficiency in the next step can be improved. Note that the moisture content of the filtered rubber crumbs is normally 40 wt% or more.

The step (D) is characterized by dehydrating the filtered rubber crumbs obtained in the step (C) with a dehydrator having a compression function.

By dehydrating the above filtered rubber crumbs, wherein the moisture content is adjusted to a predetermined value or less, by using a dehydrator having a compression function, dispersability of silica can be heightened to a level unable to be attained by conventional methods. As a result, a silica-containing rubber composition to be obtained can be given excellent properties, such as mechanical strength, fuel efficiency and road holding property, when formed to be a tire.

(Dehydrator having Compression Function)

The dehydrator having a compression function used in the step (D) is not particularly limited as far as it has a function of squeezing out a coagulating solution by compressing the filtered rubber crumbs. For example, a device having a barrel provided with a screw therein (compressing crumbs between the barrel wall and the screw flight), a press-type device (compressing by sealing crumbs in a cavity with a certain volume), and a device with rolls (compressing by feeding crumbs between rolls having a certain clearance), may be used. Particularly, as the above dehydrator, it is preferable to use an extruding machine having a barrel provided with a screw therein. As an extruding machine having a barrel provided with a screw therein, a single-roll extruding machine and a twin-roll extruding machine having a heat-resistant barrel provided with a screw therein or a dehydrating slit may be used.

In the step (D), the above filtered rubber crumbs are fed in the above dehydrator for dehydration. A temperature of the rubber crumbs to be fed is not particularly limited and may be equal to the coagulating temperature or may be cooled to be equal to the ambient temperature. Note that the dehydration of the rubber crumbs may be performed by combining two or more kinds of the above devices.

When performing the step (D) by using an extruding machine, it is preferable that an inner pressure of a barrel of the extruding machine is temporarily made to be higher than that at the time of a normal operation to perform dehydrating of the filtered rubber crumbs in the extruding machine. Due to this, comparing with the case of performing hot air drying and vacuum drying directly on a water containing crumbs, the water content (moisture content) of the rubber crumbs can be reduced with lower energy.

The method of making an inner pressure of a barrel of an extruding machine to be temporarily higher than that at the time of a normal operation when performing dehydrating in the extruding machine is not particularly limited, but it is preferable that a part or all of a crumb outlet of the extruding machine is temporarily blocked. Also, an operation of temporarily blocking the crumb outlet is performed preferably on an initial stage of the crumb dehydrating step. Note that it may be performed in the middle stage of the crumb dehydrating step.

When a part or all of the crumb outlet is temporarily blocked to make the inner pressure of the extruding machine barrel to be temporarily higher than that at the time of a normal operation, a coagulating crumbs come to a state of being compressed to the extruding direction, and the rubber crumbs can be prevented from becoming a paste in the extruding machine by a shearing force of the screw, Consequently, water in the rubber crumbs can be effectively removed.

In the above explanation, a method of temporarily blocking a part or all of the crumb outlet of the extruding machine is preferably a method of filling with filling subatance near the crumb outlet in the extruding machine. According to this method, a degree of blockage of the crumb outlet can be adjusted by a kind and amount, of the filling substance. Also, it is preferable that the filling substance is filled immediately before dehydrating the rubber crumbs, and the blocking operation is performed at an initial stage of the dehydrating step.

In the above explanation, as the filling substance used for the blockage, those including at least one of rubber, resin and ice are preferably used.

As rubber used as the filling substance, styrene-butadiene rubber, butadiene rubber, isoprene rubber, butyl rubber, ethylene-propylene-diene rubber, acrylonitrile-butadiene rubber, acrylic rubber, hydrogenated acrylonitrile-butadiene rubber, fluorocarbon rubber, silicon rubber and other rubber; rubber compositions obtained by mixing carbon black, silica or other filler in these rubber; may be mentioned.

Also, as rubber used as the filling substance, the same kind of rubber as the silica-containing rubber dehydrated by the method of the present invention may be used.

As a resin used as the filling substance, high-styrene resin, polystyrene, high-impact polystyrene, acrylonitrile styrene butadiene resin, polycarbonate, acrylic resin, polyethylene terephthalate, polyethylene, polypropylene, vinyl chloride resin, cycloolefin-based resin; and resin compositions obtained by mixing grass fiber, carbon fiber or other filler in these resins; may be mentioned. These rubber and resin, may be used alone and in combination of two or more kinds.

A shape and size of the filling substance are not limited as far as it can be added from an inlet of the extruding machine, and it can be suitably selected in accordance with a degree of blockage. For example, crumbs can be used in the case of rubber, and pellets can be used in the case of a resin. It is possible to use by combining those having different shapes and sizes.

As a method of filing an extruding machine with filling substance, for example, the above rubber crumbs, resin powder and resin pellets, are fed in the extruding machine, and the filling substance is extruded by a normal method without blocking the outlet. When an operation of the extruding machine is stopped at a point that most of the fed filling substance is brought out, the filling substance normally remains near the outlet, so that dehydrating may be performed as it is by feeding a silica-containing rubber crumbs and starting an operation of the extruding machine again.

Note that when the filling substance is an ice, extruding of crumbs is started before the ice remained near the outlet melts.

A moisture content of rubber crumbs after dehydrating by the above dehydrator is preferably 0 to 50 wt%, more preferably 3 to 40 wt%, and particularly preferably 5 to 30 wt%. When the moisture content is too high, it means that dehydrating is not effectively performed and the rubber crumbs become a paste in some cases, consequently, a drying step after that becomes difficult. A temperature of the rubber crumbs immediately after the dehydrating is preferably 20 to 180°C, more preferably 40 to 150°C, and particularly preferably 60 to 130°C. When it is in these ranges, dehydrating is effectively performed, and reinforcing properties, such as extension strength and withstand to wearing, and a fuel efficiency when formed to be a tire become preferable.

The step (E) is a step for drying the rubber crumbs dehydrated in the step (D). It is preferable that the drying is performed by furthermore performing at least any one of operations of depressurizing, heating, centrifuging and compressing on the dehydrated rubber crumbs. It is more preferable to perform at least any one of operations of depressurizing and heating, and it is the most preferable to perform the both. These operations may be performed by a device attached to the dehydrator or performed separately.

As a specific method of drying the dehydrated crumbs by at least any one of operations of heating, depressurizing, centrifuging and compressing, (1) a method of drying by placing the dehydrated rubber crumbs under a decreased pressure and/or heat, and (2) a method of drying by alternately performing a pressurizing operation and depressurizing operation on the dehydrated rubber crumbs, may be mentioned.

As the above method (1), vacuum drying and hot air drying are mentioned. When drying a rubber crumb by the method, it is preferable to dry by vacuum drying or hot air drying after finely cutting and grinding the rubber crumbs adhered to each other after dehydrating with a cutter and grinder, and thereby, a drying time of the crumbs can be made short. The drying temperature at the time of drying by a vacuum dryer or a hot air dryer is preferably 50 to 200°C, more preferably 60 to 150°C, and particularly preferably 70 to 120°C. When the drying temperature is in these ranges, drying can be effectively performed, deterioration and ignition, of a rubber composition to be obtained can be prevented, and extension strength and withstand to wearing, become preferable.

A moisture content after drying the rubber crumbs by a vacuum dryer or a hot air dryer is preferably 5 wt% or less, more preferably 3 wt% or less, and particularly preferably 1 wt% or less. When the moisture content after drying is too high, dew condensation arises on a packaged rubber composition and scorching is caused when mixing a variety of compounding agents in a rubber composition by an extruding machine in some cases.

As the above method (2), a method of drying by supplying dehydrated rubber crumbs to the same extruding machine having a barrel provided with a screw therein used for dehydrating and performing expansion at the time of discharging, so that liquid remained in the rubber crumbs is discharged may be mentioned. Here, the expansion means a method of drying the crumbs by adiabatic expansion caused by compressing the crumbs in the barrel and abruptly releasing the pressure at the time of discharging to outside the barrel.

Also, as a method combining the above methods (1) and (2), a method of drying rubber crumbs by supplying the dehydrated rubber crumbs to an extruding machine having a pressurization portion, a depressurization portion and a barrel provided with a screw therein may be mentioned. A silica-containing rubber composition obtained by the method exhibits preferable reinforcing properties, such as expanding strength and withstand to wearing, and fuel efficiency.

A drying temperature at the time of drying by the above extruding machine is preferably 80 to 220°C, more preferably 100 to 200°C, and particularly preferably 120 to 180°C. When the drying temperature is in these ranges, drying can be performed effectively, deterioration and ignition, of a rubber composition to be obtained can be prevented, and reinforcing properties, such as expanding strength and withstand to wearing, and fuel efficiency become preferable. It is preferable that the extruding machine used for drying the above rubber crumbs has a screw for preventing accumulation of rubber crumbs near a die. Specifically, it is preferable to use a screw wherein the flight extends to a screw head portion disclosed in the Japanese Utility Model Publication No. 1-83522 or a screw having a nonaxisymmetric screw head disclosed in the Japanese Unexamined Patent Publication No. 62-21518. Also, the extruding machine is preferably provided with a die having a narrow clearance with the screw head and a cavity becoming narrower toward the outlet side. By using an extruding machine having such a screw and die, even silica-containing rubber crumbs having high viscosity due to drying can be effectively discharged from the die and a drying efficiency is improved.

Also, an extruding machine used for dehydrating and that used for drying may be integrated, directly connected, or separated and dehydrated rubber crumbs may be fed in an extruding machine used for drying. Note that when the extruding machine used for dehydrating and that used for drying are integrated in the present invention, a clearance between the screw and barrel on a boundary of a dehydrating zone and a drying zone is treated as "a crumb outlet" of the extruding machine used for dehydrating.

A moisture content of rubber crumbs after being dried by the above extruding machine is preferably 10 wt% or less, more preferably 5 wt% or less, and particularly preferably 3 wt% or less. After drying by the extruding machine, it is furthermore dried by a vacuum dryer or a hot air dryer, so that the moisture content can be reduced.

A moisture content of a silica-containing rubber composition finally obtained by the above method is preferably 5 wt% or less, more preferably 3 wt% or less, and particularly preferably 1 wt% or less. When the moisture content after drying is too high, dew condensation arises on a packaged rubber composition and burn marks arise when mixing a variety of compounding agents in a rubber composition by the extruding machine, in some cases.

In the present invention, a silica-containing rubber composition after drying can be obtained in a form of a block, sheet and pellets, but it is preferable to obtain in a form of a sheet or pellets for reducing a power load when mixing a variety of compounding agents after drying.

When using the above extruding machine in the drying step in the present invention, organopolysiloxane and a polyether-based polymer may be added to the rubber crumbs before drying. When the moisture content of the rubber crumbs reduces, the viscosity becomes high, but the viscosity of the rubber crumbs becomes low by adding organopolysiloxane and a polyether-based polymer, and a power load on the extruding machine can be made small. As the organopolysiloxane, those having a polymerization degree of 3 to 10,000 are preferable, and a methoxy group, a hydroxyl group, an amino group, an alkoxy group, an epoxy group, a carbonyl group, a sulfide group, a sulfonyl group, a nitrile group and other functional groups are preferably included. Also, a polyether-based polymer is a polymer having ether bond in its main chain and, for example, polymers of alkylene oxide, epihalohydrin, unsaturated epoxide and other oxirane compounds, having molecular weight of 100 to 10,000,000 are preferable. These may be used alone or in combination of two or more kinds.

An adding amount may be in a range of reducing a power load on the extruding machine, and is preferably in a range of 0.1 to 50 parts by weight with respect to 100 parts by weight of silica. The adding method may be added in any step before the drying step by the extruding machine. A method of feeding to an extruding machine for drying, a method of adding to dehydrated crumbs, a method of feeding to a barrel of the extruding machine for dehydrating, a method of adding to crumbs before dehydrating, a method of adding in a co-coagulating step, a method of adding to rubber latex in advance, and a method of adding to aqueous silica dispersions in advance may be mentioned. It is preferable to add to rubber latex or aqueous silica dispersions before co-coagulating in advance for adding accurately.

In the present invention, a silane coupling agent may be further added to a rubber composition. By blending a silane coupling agent, reinforcing properties and fuel efficiency are furthermore improved. As a silane coupling agent, for example, vinyltriethoxysilane, β-(3,4-epoxycyclohexyl) ethyltrimethoxysilane, N-(β-aminoethyl)-y-aminopropyl trimethoxysilane, 3-octathio-1-propyltriethoxysilane, bis(3-(triethoxysilyl)propyl)tetrasulfide, bis(3-(triethoxysilyl)propyl)disulfide; γ-trimethoxysilylpropyldimethylthiocarbamyltetrasulfide, γ-trimethoxysilylpropylbenzothiazyltetrasulfide and other tetrasulfides; may be mentioned. These silane coupling agents may be used alone or in combination of two or more kinds. A blending quantity of the silane coupling agent with respect to 100 parts by weight of silica is preferably 0.1 to 20 parts by weight, more preferably 0.5 to 15 parts by weight and most preferably 1 to 10 parts by weight.

In the present invention, a silylating agent may be further added to a rubber composition. By blending a silylating agent, reinforcing properties and fuel efficiency are furthermore improved. As a silylating agent, for example, phenyltrichlorosilane, diphenyldichlorosilane, trimethylchlorosilane, tert-butyldimethylchlorosilane and other chlorosilane compounds; phenyltrimethoxysilane, phenyltriethoxysilane, isobutyltrimethoxysilane, diphenyldimethoxysilane, vinyltris(β-methoxy)silane, γ-aminopropyl triethoxysilane, γ-mercaptopropyltrimethoxysilane and other alkoxysilane compounds; hexamethyldisilazane and other silazane compounds; N-trimethylsilylacetamide, N,N-(bistrimethylsilyl)acetamide and other acetamides; N,N-(bistrimethylsilyl)urea and other ureas; may be mentioned. These silylating agents may be used alone or in combination of two or more kinds. Among these silylating agents, particularly a chlorosilane compound, an alkoxysilane compound and a silazane compound are preferably used.

A blending quantity of a silylating agent with respect to 100 parts by weight of silica is preferably 0.1 to 20 parts by weight, more preferably 0.5 to 15 parts by weight, and most preferably 1 to 10 parts by weight.

The above silane coupling agents and silylating agents may be blended anytime before and after the above coagulating step and before and after the dehydrating step. Specifically, a method of blending to the above aqueous silica dispersions in advance, a method of blending to a mixture of a cationic substance and silica in advance, a method of blending to rubber latex, a method of blending at the time of co-coagulating, a method of blending by feeding into a barrel of an extruding machine for dehydrating, and a method of blending to dehydrated rubber crumbs, etc. may be mentioned. Also, they may be blended at the time of kneading with a later explained roll or Banbury mixer. They may be divided to be mixed by a small quantity in all of the steps.

It is preferable to add to rubber latex or aqueous silica dispersions before co-coagulating in advance for adding accurately. Also, to improve reinforcing properties and fuel efficiency of a rubber composition, it is particularly preferable to add to aqueous silica dispersions before adding a cationic polymer. Also, a mixing temperature at the time of mixing a silane coupling agent and silylating agent with aqueous silica dispersions is normally 10 to 100°C, preferably 40 to 90°C and more preferably 60 to 80°C, and a mixing time is normally 0.1 to 180 minutes, preferably 0.5 to 150 minutes, and more preferably 1 to 120 minutes.

The silane coupling agents and silylating agents have an effect of lowering viscosity of a rubber composition in the same way as the above organopolysiloxane. Therefore, in the case of using the above extruding machine as a dryer, a load at the time of kneading can be reduced to save power, so that it is preferable to blend before feeding rubber crumbs into the dryer.

A silica-containing rubber composition of the present invention may be suitably blended with a compounding agent, such as carbon black and other reinforcing agents; talc, calcium carbonate, aluminum hydroxide and other fillers; antioxidants; activators; and plasticizers; within a range of not undermining the effects of the present invention.

As carbon black, for example, furnace black, acetylene black, thermal black, channel black and graphite, may be used. Among these, furnace black is particularly preferable. As a reinforcing agent, carbon black or carbon-silica dual-phase filler obtained by depositing silica on carbon black surface may be blended. A total amount of the reinforcing agent is preferably 20 to 200 parts by weight with respect to 100 parts by weight of rubber to attain desired concentration. Also, silica having a different specific surface area and oil-absorption rate from those of silica used in the silica-containing rubber composition of the present invention may be blended.

(Cross-Linking Molding)

The silica-containing rubber composition of the present invention can be made to be a cross-linking molding particularly suitable for a tire by molding by cross-linking by blended with a cross-linking agent. As a cross-linking agent, for example, powdery sulfur, precipitated sulfur, colloidal sulfur, insoluble sulfur, high dispersible sulfur and other sulfurs; sulfur monochloride, sulfur dichloride and other sulfur halides; dicumyl peroxide, di-tartiary-butyl peroxide and other organic peroxides; p-quinone dioxime, p,p'-dibenzoyl quinone dioxime and other quinone dioximes; triethylenetetramine, hexamethylenediamine carbamate, 4,4'-methylene bis-o-chloroaniline and other organic polyvalent amine compounds; and alkylphenol resins having a methylol group; may be mentioned. Among these, sulfurs are preferable. These cross-linking agents may be used alone or in combination of two kinds or more. A blending quantity of cross-linking agents with respect to 100 parts by weight of rubber is preferably 0.3 to 10 parts by weight, and more preferably 0.5 to 5 parts by weight.

Also, the cross-linking agent can be used with a cross-linking accelerator and a cross-linking activator. As a cross-linking accelerator, N-cyclohexyl-2-benzothiazolesulfenamide, N-t-butyl-2-benzothiazolesulfenamide, N-oxyethylene-2-benzothiazolesulfenamide, N-oxyethylene-2-benzothiazolesulfenamide, N,N'-diisopropyl-2-benzothiazolesulfenamide and other sulfonamide-based cross-linking accelerators; diphenylguanidine, di-orthotolylguanidine, ortho-tolylbiguanidine and other guanidine-based cross-linking accelerators; diethylthiourea and other thiourea-based cross-linking accelerators; 2-mercaptobenzothiazole, dibenzothiazyldisulfide, 2-mercaptobenzothiazole zinc salt and other thiazole-based cross-linking accelerators; tetramethylthiuram monosulfide, tetramethylthiuram disulfide and other thiuram-based cross-linking accelerators; dimethyldithiocarbamate sodium, diethyldithiocarbamate zinc and other dithiocarbamate-based cross-linking accelerators; isopropylxanthate sodium, isopropylxanthate zinc, butylxanthate zinc and other xanthate-based cross-linking accelerators. may be mentioned. These cross-linking accelerators may be used alone or in combination of two or more kinds, but those including a sulfenamide-based cross-linking accelerator are preferable. A blending quantity of cross-linking accelerators with respect to 100 parts by weight of rubber is preferably 0.3 to 10 parts by weight, more preferably 0.5 to 5 parts by weight.

As a cross-linking activator, for example, higher fatty acid, such as stearic acid, and a zinc oxide may be used. As a zinc oxide, those having high surface activity and a particle size of 5 $\mu$m or less are preferably used. An active zinc oxide having a particle size of 0.05 to 0.2 $\mu$m and a zinc oxide having a particle size of 0.3 to 1 $\mu$m may be mentioned. Also, a zinc oxide may be subjected to surface processing by an amine-based dispersant and wetting agent. These cross-linking activators may be used alone or in combination with two or more kinds. A blending quantity of cross-linking activators with respect to 100 parts by weight of rubber is preferably 0.3 to 10 parts by weight, and more preferably 0.5 to 5 parts by weight. A blending quantity of a zinc oxide with respect to 100 parts by weight of rubber is preferably 0.1 to 5 parts by weight, and more preferably 0.5 to 2 parts by weight.

A cross-linking method may be selected in accordance with a property and size of a cross-linking molding. Cross-linking may be performed simultaneously with molding by filling a cross-linking rubber composition in a mold and heating, or cross-linking may be performed by heating an unvulcanized rubber composition molded in advance. A cross-linking temperature is preferably 120 to 200°C, more preferably 100 to 190°C, and most preferably 120 to 180°C.

The silica-containing rubber composition of the present invention may be used for, for example, a tread, under tread, carcass, sidewall, bead and other tire parts; a hose, window frame, belt, shoe sole, vibrationproof rubber, automobile parts, vibration isolating rubber and other rubber members; high-impact polystyrene, an ABS resin, and other resin reinforcing rubber menbers. Among these, it is preferable as a tire member and particularly preferable as a tire tread of a fuel-effective tire.

EXAMPLES

To furthermore specifically explain the present invention, examples and comparative examples will be explained below. Note that "part" and "%" are based on weight unless otherwise mentioned. Various properties of the examples and comparative examples were measured by methods below.

(Property Evaluation)

(1) As an average particle diameter of silica, a value of a volume reference medium diameter measured by using a device for measuring particle size distribution of a light scattering diffraction type (LS-230 made by Coulter Inc.) was applied.

(2a) As a specific surface area ($S_{CTAB}$) measured by cetyltrimethylammonium bromide (CTAB) adsorption, a value obtained based on a method described in the ASTM D3765-92 after putting silica wet cakes into a dryer (120°C) for drying. Note that the method described in the ASTM D3765-92 is a method for measuring the ($S_{CTAB}$) of carbon black, so that it was a little improved. Namely, without using ITRB(83.0 m$^2$/g) as standard preparation of carbon black, a CTAB standard liquid is prepared separately, an Aerosol (registered trademark) OT solution was standardized thereby, an adsorption section area per one CTAB molecule with respect to the silica surface is assumed to be 35 square angstroms, and a specific surface area was calculated from an adsorption amount of CTAB. It is because surface condition is different between carbon black and silica, so that an adsorption amount of CTAB is considered to be different even on a same specific surface area.

(2b) As a specific surface area ($S_{BET}$) measured by a nitrogen adsorption method, a value of a single-point method under a relative pressure of 0.2 obtained by putting silica wet cakes into a dryer (120°C) to dry, then, measuring a nitrogen adsorption amount by using the ASAP2010 made by Micromeritics Instrument Corporation was applied.

(3) An oil absorption rate was obtained by the JIS K6220.

(4) A styrene unit amount in a copolymer was measured based on the JIS K6383 (a refraction index method) .

(5) A silica content was obtained by measuring a combustion residue rate and a weight decrease rate up to 150°C after heat decomposition of a dried sample in the air by using the thermal analysis device TG/DTA (TG/DTA320 made by SII NanoTechnology Inc.) and calculating by using the formula below. In examples, it was described by converting to an amount (part, weight basis) with respect to 100 parts of rubber. Measurement was made under a condition of a temperature raising rate of 20°C/min. in the air, and holding time of 20 minutes at an intended temperature of 600°C.

$$\text{Silica Content (\%) = Combustion Residue Rate /}$$

$$\text{[100-(Weight Decrease Rate up to 150°C)]×100}$$

(6) Hardness was measured by using a Duro-A harness meter based on the JIS K6253. The characteristic was indicated by an index assuming that a reference sample is 100.

(7) 100% and 300% modulus were measured by an tensile stress testing method of the JIS K6251. Furthermore, a ratio of a 300% extension stress (MPa) and 100% extension stress (MPa) was calculated. The characteristic was indicated by an index (reinforcing index) assuming that a reference sample is 100. It indicates that the larger the value, the more preferable silica dispersion is and more excellent the mechanical strength and reinforcing properties are.

(8) The "tan $\delta$" and "G' (-10°C) " were values measured by using RDA-II made by Rheometric Science Inc. under a condition of torsion of 0.5% and 20 Hz at -10°C. The characteristic was indicated by an index. When the "tan $\delta$" (-10°C) value is large and/or "G'(-10°C)" value is small, it indicates it is excellent in a road holding property on a wet pavement.

(9) "tan $\delta$" (60°C) was "tan $\delta$" measured by using RDA-II made by Rheometric Science Inc. under a condition of torsion of 0.5% and 20 Hz at 60°C. The characteristic was indicated by an index. When the "tan $\delta$" (60°C) value is small, it indicates excellent fuel efficiency.

(10) Strain dependency of an elastic modulus was measured by using RDA-II made by Rheometric Science Inc. under a condition of 1 Hz, torsion in a range of 0.05% to 10% at 50°C. A difference of a G' value with torsion of 10% and that with torsion of 0.1% was obtained as $\Delta$G'. The characteristic was indicated by an index. When the value is small, it indicates that dispersion of silica is preferable and fuel efficiency is excellent.

(Rubber Production Example 1)

200 parts of deionized water, 1.5 parts of rosin acid soap, 2.1 parts of fatty acid soap, and as monomers, 72 parts of 1,3-butadiene, 28 parts of styrene, and 0.20 part of t-dodecylmercaptan were fed into a pressure reactor with a mixer. The reactor temperature was set to be 10°C and, as a polymerization initiator, 0.03 part of diisopropylbenzen hydroperoxide, 0.04 part of sodium formaldehyde sulfoxylate, 0.01 part of sodium ethylenediamine tetraacetate and 0.03 part of ferric sulfate were added to the reactor to start polymerization. At a point the polymerization conversion rate reached 45%, 0.05 part of t-dodecilmercaptan was added and the reaction was continued. At a point the polymerization conversion rate reached 70%, 0.05 part of diethylhydroxylamine was added and the reaction was stopped.

Next, after removing unreacted monomers by steam distillation, with respect to 100 parts of the polymer, 0.8 part of octadecyl-3-(3,5-di-t-butyl-4-hydroxyphenyl)propionate and 0.12 part of 2,4-bis(n-octylthiomethyl)-6-methylphenol were made to be 30% emulsion solution and added as an antioxidant, and polymer latex (R1) was obtained. Next, a part of the polymer latex (R1) was taken out and, while being adjusted by sulfuric acid to have a pH of 3 to 5, the polymer latex was coagulated by sodium chloride at 50°C to obtain a polymer in crumbs. The obtained polymer crumbs were dried by a hot air dryer at 80°C to obtain solid rubber. The obtained rubber had a styrene content of 23.5% and Mooney viscosity of 52.

(Rubber Production Example 2)

Other than changing quantities of respective components to be fed or added to the reactor as below, polymerization reaction was brought by the same method as in the production example 1: 57.5 parts of 1,3-butadiene, 42.5 parts of styrene, and 0.12 part of t-dodecylmercaptan (first fed quantities), 0.1 part of diisopropylbenzen hydroperoxide, 0.06 part of sodium formaldehyde sulfoxylate, 0.014 part of sodium ethylenediamine tetraacetate and 0.02 part of ferric sulfate.

Next, after removing unreacted monomers by steam distillation, with respect to 100 parts of the polymer, 0.21 part of N-(1,3-dimethylbutyl)-N'-phenyl-p-phenylenediamine and 0.14 part of 2,2,4-trimethyl-1,2-dihydroquinoline were made to be 60% emulsion solution and added as an antioxidant to obtain polymer latex (R2). Next, a part of the polymer latex (R2) was taken out and, 37.5 parts of Enerthene 1849A (made by British Petroleum P.L.C.) as extender oil made to be 66% emulsion solution by fatty acid soap was added with respect to 100 parts of the polymer latex. After that, while adjusting the same by sulfuric acid to give a pH of 3 to 5, the polymer latex including the extender oil was coagulated by sodium chloride at 60°C to obtain a polymer in crumbs. The obtained polymer crumbs were dried by a hot air dryer at 80°C to obtain solid rubber. The obtained rubber had a styrene content of 35.0% and Mooney viscosity of 49.

(Silica Production Example 1)

A reactor vessel of 1 $m^3$ having a temperature adjuster is fed 201 litters of sodium silicate solution ($SiO_2$ concentration: 10g/litter, molar ratio: $SiO_2/Na_2O$ = 3.41) and the temperature was raised to 95°C. Next, 77 litters of 22% sulfuric acid and 455 litters of sodium silicate solution ($SiO_2$ concentration: 90g/litter, molar ratio: $SiO_2/Na_2O$ = 3.41) were fed together by taking 140 minutes. After 10 minutes of maturing, 16 litters of 22% sulfuric acid was fed by taking 15 minutes. The above reaction was proceeded by maintaining the reaction liquid temperature at 95°C while constantly agitating the reaction liquid, so that finally silica slurry having a reaction liquid pH of 2.9 was obtained. The result was filtered by a filter press and washed with water to obtain silica wet cakes (A), wherein a silica solid content was 25%. Silica powder obtained by drying a part of the obtained silica wet cakes (A) had a BET specific surface area ($S_{BET}$) of 121 $m^2/g$, a CTAB specific surface area ($S_{CTAB}$) of 110 $m^2/g$, and an oil absorption rate of 170 ml/ 100g.

(Silica Production Example 2)

Other than changing a feeding quantity of sodium silicate solution to 150 litters, the same reacting vessel and sodium silicate solution were used as those in the production example 1, and the temperature was raised to the same temperature. Next, other than changing feeding quantities of 22% sulfuric acid and sodium silicate solution respectively to 78 litters and 461 litters, the feeding time to 190 minutes, and a feeding quantity of 22% sulfuric acid to 15 litters, silica slurry having a pH of 3.1 was obtained in the same way as in the production example 1. In the same way as in the production example 1, silica wet cakes (B) were obtained, wherein a silica solid content was 27%. Silica powder obtained by drying a part of the obtained silica wet cakes (B) had a BET specific surface area ($S_{BET}$) of 100 $m^2/g$, a CTAB specific surface area ($S_{CTAB}$) of 93 $m^2/g$, and an oil absorption rate of 165 ml/ 100g.

(Silica Production Example 3)

Other than changing a feeding quantity of sodium silicate solution to 201 litters, the same reacting vessel and sodium silicate solution were used as those in the production example 1, and the temperature was raised to 90°C. Next, other than maintaining the reaction liquid temperature at 90°C, with the same feeding quantities of 22% sulfuric acid and sodium silicate solution and the feeding time, and the same quantity of 22% sulfuric acid was fed in the same way as in the production example 1, so that silica slurry having a pH of 3.0 was obtained. In the same way as in the production example 1, silica wet cakes (C) were obtained, wherein a silica solid content was 25%. Silica powder obtained by drying a part of the obtained silica wet cakes (C) had a BET specific surface area ($S_{BET}$) of 135 $m^2/g$, a CTAB specific surface area ($S_{CTAB}$) of 125 $m^2/g$, and an oil absorption rate of 175 ml/ 100g.

(Silica Production Example 4)

Other than changing a feeding quantity of sodium silicate solution to 224 litters and raising the temperature to 90°C, the same reacting vessel and sodium silicate solution were used as those in the production example 1. Next, other than changing feeding quantities of 22% sulfuric acid and sodium silicate solution respectively to 76 litters and 452 litters, the feeding time to 125 minutes, a feeding quantity of 22% sulfuric acid to 17 litters, and the reaction liquid temperature to 90°C, silica slurry having a pH of 3.2 was obtained in the same way as in the production example 1. In the same way as in the production example 1, silica wet cakes (D) were obtained, wherein a silica solid content was 24%. Silica powder obtained by drying a part of the obtained silica wet cakes (D) had a BET specific surface area ($S_{BET}$) of 150 $m^2/g$, a CTAB specific surface area ($S_{CTAB}$) of 138 $m^2/g$, and an oil absorption rate of 177 ml/ 100g.

(Silica Production Example 5)

Other than changing a feeding quantity of sodium silicate solution to 305 litters and raising the temperature to 80°C, the same reacting vessel and sodium silicate solution were used as those in the production example 1. Next, other than changing feeding quantities of 22% sulfuric acid and sodium silicate solution respectively to 75 litters and 444 litters, the feeding time to 90 minutes, a feeding quantity of 22% sulfuric acid to 18 litters, and the reaction liquid temperature to 80°C, a silica slurry having a pH of 3.2 was obtained in the same way as in the production example 1. In the same way as in the production example 1, silica wet cakes (E) were obtained, wherein a silica solid content was 24%. Silica powder obtained by drying a part of the obtained silica wet cakes (E) had a BET specific surface area ($S_{BET}$) of 300 $m^2/g$, a CTAB specific surface area ($S_{CTAB}$) of 275 $m^2/g$, and an oil absorption rate of 250 ml/ 100g.

EP 1 640 414 B1

(Aqueous Silica Dispersions Production Example 1)

The silica wet cakes (A) obtained by the above silica production example 1 were mixed with pure water, so that silica concentration becomes 15%, added with bis(3-(triethoxysilyl)propyl)tetrasulfide in 10% solution by 1% with respect to the silica, and agitated for ten minutes at 50°C by using a homogenizer. Next, 3% solution of a cationic polymer (polydiarylmethylammonium chloride having weight average molecular weight of 20,000 and cation equivalent molecular weight of 146 calculated by colloid titration) was added to the silica, so that cationic polymer becomes 3%, which was mixed by agitating for 20 minutes by using a homogenizer to obtain aqueous silica dispersions (I). The aqueous dispersions had a pH of 3.5 and silica concentration of 13%, and an average particle diameter of silica in the aqueous dispersions was 17 μm.

(Aqueous Silica Dispersions Production Example 2)

The silica wet cakes (B) obtained by the above silica production example 2 were mixed with pure water, so that silica concentration becomes 15%, and added with 3% solution of a cationic polymer (polydiaryldimethylammonium chloride having weight average molecular weight of 20,000 and cation equivalent molecular weight of 162 calculated by colloid titration) by 3% with respect to the silica, and mixed by agitating for 20 minutes by using a homogenizer to obtain aqueous silica dispersions (II). The aqueous dispersions had a pH of 3.5 and an average particle diameter of silica in the aqueous dispersions was 16 μm.

(Aqueous Silica Dispersions Production Example 3)

Except that the silica wet cakes (C) obtained by the above silica production example 3 were mixed with pure water, so that silica concentration becomes 15%; and added with 3% solution of a cationic polymer (same as that in the production example 1), so that the cationic polymer becomes 3.5% with respect to the silica; aqueous silica dispersions (III) was obtained in the same way as in the production example 2. The aqueous dispersions had a pH of 3.4 and an average particle diameter of silica in the aqueous dispersions was 15 μm.

(Aqueous Silica Dispersions Production Example 4)

Except that the silica wet cakes (D) obtained by the above silica production example 4 were mixed with pure water, so that silica concentration becomes 15%; and added with 3% solution of a cationic polymer (same as that in the production example 1), so that the cationic polymer becomes 4% with respect to the silica; aqueous silica dispersions (IV) was obtained in the same way as in the production example 2. The aqueous dispersions liquid had a pH of 3.4 and an average particle diameter of silica in the aqueous dispersions was 16 μm.

(Aqueous Silica Dispersions Production Example 5)

Except that the silica wet cakes (E) obtained by the above silica production example 5 were mixed with pure water, so that silica concentration becomes 15%; and added with 3% solution of a cationic polymer (same as that in the production example 1), so that the cationic polymer becomes 5% with respect to the silica; aqueous silica dispersions (V) was obtained in the same way as in the production example 2. The aqueous dispersions had a pH of 3.2 and an average particle diameter of silica in the aqueous dispersions was 14 μm.

(Production Example 1 of Co-coagulating Crumbs of Silica and Rubber)

720 parts of SBR latex (solid content of 23%) obtained by the rubber production example 1 was diluted by 2000 parts of pure water and the temperature was raised to 50°C while agitating. Next, 600 parts of aqueous silica dispersions (I) was added to the diluted latex under agitation to generate a mixture of silica and rubber. The mixture had a pH of 7.5. Next, 10% sulfuric acid is added to the mixture and the SBR latex was completely coagulated, so that slurry including solid crumbs of silica-containing rubber was obtained. A final pH of the mixture (slurry) was 6.5. Note that the temperature of the mixture was maintained at 50°C. The obtained solid crumbs were washed with water and recovered by wire mesh having a 40 mesh screen to obtain solid crumbs (A). The solid crumbs (A) were dried at 120°C for three hours, and a moisture content measured from the weight decrease rate before and after that was 61%. Furthermore, as a result of taking out a part of the solid crumbs (A), drying and measuring a silica content, it was 47 parts with respect to 100 parts of SBR.

(Production Example 2 of Co-coagulating Crumbs of Silica and Rubber)

Other than changing the aqueous silica dispersions to 520 parts of the (II), slurry including coagulating crumbs of silica-containing rubber was obtained in the same way as in the (Production Example 1 of Co-coagulating Crumbs of Silica and Rubber). A final pH of the mixture (slurry) was 6.7. The obtained solid crumbs were washed with water and recovered by wire mesh having a 40 mesh screen, so that solid crumbs (B) having a moisture content of 58% were obtained. A part of the solid crumbs (B) was taken out and dried, and a result of measuring the silica content was 47 parts with respect to 100 parts of SBR.

(Production Example 3 of Co-coagulating Crumbs of Silica and Rubber)

720 parts of SBR latex (solid content of 23%) obtained by the rubber production example 2, and 62 parts of extender oil Enerthene 1849A (made by British Petroleum P.L.C.) and 5 parts of polysiloxane FZ3704 (made by Nippon Unicar Co., Ltd.) made to be 66% emulsion solution by fatty acid soap were mixed. The mixture was diluted by 2000 parts of pure water and the temperature was raised to 60°C. Next, 750 parts of aqueous silica dispersions (III) was added to the diluted latex under agitation, then, 10% sulfuric acid is added to the mixture and the SBR latex was completely solidified, so that slurry including solid crumbs of silica-containing rubber was obtained. A final pH of the mixture (slurry) was 6.8. Note that the temperature of the mixture was maintained at 60°C. The obtained solid crumbs were washed with water and recovered by wire mesh having a 40 mesh screen to obtain solid crumbs (C) having a moisture content of 65%. A part of the solid crumbs (C) was taken out and dried, and a result of measuring a silica content was 68 parts with respect to 100 parts of SBR.

(Production Example 4 of Co-coagulating Crumbs of Silica and Rubber)

Other than changing the aqueous silica dispersions to 520 parts of the (IV) and not adding polysiloxane, slurry including solid crumbs of silica-containing rubber was obtained in the same way as in the (Production Example 3 of Co-coagulating Crumbs of Silica and Rubber). A final pH of the mixture (slurry) was 6.6. The obtained solid crumbs were washed with water and recovered by wire mesh having a 40 mesh screen, so that solid crumbs (D) having a moisture content of 62% were obtained. A part of the solid crumbs (D) was taken out and dried, and a result of measuring the silica content was 47 parts with respect to 100 parts of SBR.

(Production Example 5 of Co-coagulating Crumbs of Silica and Rubber)

Other than changing the aqueous silica dispersions to the (V), slurry including solid crumbs of silica-containing rubber was obtained in the same way as in the (Production Example 2 of Co-coagulating Crumbs of Silica and Rubber). A final pH of the mixture (slurry) was 6.6. The obtained solid crumbs were washed with water and recovered by wire mesh having a 100 mesh screen, so that solid crumbs (E) having a moisture content of 81% were obtained. A part of the solid crumbs (E) was taken out and dried, and a result of measuring the silica content was 46 parts with respect to 100 parts of SBR.

Example 1

In the present example, an extruding machine 2 shown in FIG. 1 was used as a device for dehydrating and drying solid crumbs. The extruding machine 2 has a barrel 4 composed of twelve barrel units. Barrel units of No. 1 to 6 compose a dehydrating zone, and those of No. 7 to 12 compose a drying zone. The barrel unit No. 1 is a supply unit to be supplied with slurry of silica-containing rubber crumbs. The barrel units No. 3 and No. 6 are dehydrating units, to which water dehydrated from the slurry are discharged, and a dehydrating slit clearance is 0.25 mm. The barrel units No. 8 and No. 10 are bent units having a bent slit by which water included in the rubber crumbs is vaporized by heating, and a bent slit clearance is 2.0 mm. Barrel units other than the above are cylindrically shaped standard units. The unit configuration of the barrel 4 is shown in Table 1.

[Table 1]

| Zone | Unit No. | Unit Length (mm) | Type |
|---|---|---|---|
| Dehydrating | 1 | 195 | Supply |
| | 2 | 195 | Standard |
| | 3 | 195 | Slit |
| | 4 | 195 | Standard |
| | 5 | 195 | Standard |
| | 6 | 195 | Slit |
| Drying | 7 | 195 | Standard |
| | 8 | 195 | Bent |
| | 9 | 195 | Standard |
| | 10 | 195 | Bent |
| | 11 | 195 | Standard |
| | 12 | 195 | Standard |

Two screws (total length L = 2,340 mm, outer diameter D = 56 mm) 6 are provided in parallel in the barrel 4. A base end (on the left side with respect to the paper surface in FIG. 1) of each of the screws 6 is connected to a drive motor (not shown) for driving itself, and the screws 6 are driven to rotate freely. In the present example, the two screws 6 are driven to rotate in the same direction, a convex portion of one screw 6 is engaged with a concave portion of the other screw 6, and a concave portion of one screw 6 is engaged with a convex portion of the other screw 6. Namely, twin-roll engagement type screws rotating in the same direction were used.

The screws 6 are provided with a screw block for dehydrating and a screw block for drying arranged at positions corresponding to the respective zones explained above formed inside the barrel. The screw block for dehydrating and the screw block for drying are configured by suitably combining two kinds of screw elements (a fine pitch forward feeding screw element A, and a coarse pitch forward feeding screw element B) and three kinds of kneading disks (a forward feeding kneading disk C, a neutral kneading disk D and a backward feeding kneading disk E). The kneading disks have the configuration wherein a plurality of substantially oval-shaped disc plates are combined by shifting their angles. When there is only one disk, it is neutral to feeding, while by combining a plurality of disk plates by shifting their angles, they can be a forward feeding kneading disk, a neutral kneading disk or a backward feeding kneading disk. A neutral kneading disk is formed by a plurality of disk plates perpendicular to the axis direction being shifted by 90 degrees and arranged in parallel with the axis direction. An effect of compression becomes stronger in an order of B→A→C→D→E as far as the pitches are the same.

In the present example, screws 6 arranged with screw elements and kneading disks indicated below were used for regions corresponding to the respective zones.

Dehydrating Zone: BBBAABAAABAACAAABAAAB
Drying Zone: AAAEAAABAAABEAABAAABAAAB

Note that used screw elements and kneading disks are shown in Table 2.

[Table 2]

| | | Mark | Length/Pitch (mm) | Rotating direction |
|---|---|---|---|---|
| Forward Feeding Screw Element | Fine Pitch | A | 45/45 | R |
| Forward Feeding Screw Element | Coarse Pitch | B | 60/60 | R |
| Forward Feeding Kneading Disk | | C | 35/60 | R |
| Neutral Kneading Disk | | D | 35/60 | N |
| Backward Feeding Kneading Disk | | E | 35/60 | L |

Note that on the downstream side of the barrel block No. 12, a die 8 for extruding a dehydrated and dried silica-containing rubber composition in a predetermined shape, such as strands, is connected in the extruding machine 2.

In the present example, the screws 6 of the extruding machine 2 were rotated at 250 rpm, while heating the dehydrating zone at 115°C and drying zone at 160°C.

Before an operation for the example, inside of the extruding machine 2 was cleaned by an operation using Nipol SBR1502 (made by ZEON Corporation). The SBR was adhered to the kneading disks but left as it was for using the same as filling substance to block the crumb outlet (clearance between the screws and barrel on the boundary of the dehydrating zone and the drying zone) of the extruding machine 2.

Due to this, the crumb outlet of the extruding machine 2 is temporarily blocked with the SBR from the initial stage of an operation of the extruding machine 2, so that the barrel internal pressure on the crumb outlet side of the extruding machine 2 can be made once higher than that in a normal operation.

Then, an operation for the example below was performed. The above solid crumbs (A) were fed from a supply inlet of the extruding machine 2, and dehydrated and dried under the above condition. The temperature of a rubber composition (A1) discharged from an outlet was 157°C, and a moisture content thereof was 0.6%. The shape was a strand having a diameter of 5 mm or so and a length of 20 mm or so when discharged. A next operation was performed on a portion not mixed with the above filling substance (SBR).

The obtained rubber composition (A1) is mixed with a silane coupling agent (Si69 made by Degussa), paraffin wax, stearic acid, zinc oxide (zinc oxide #1 having a particle size of 0.4 $\mu$m made by the Honjo Chemical Corporation), and an antioxidant (Nocrac 6C made by Ouchishinko Chemical Industrial Co., Ltd.) by an open roll at 50°C so as to attain the blending quantities shown in Table 3, then, kneaded for two minutes by using a Banbury mixer (Labo Plastomill 100C mixer type B-250 made by Toyo Seiki Seishaku-sho Ltd.). The temperature was 150°C when the kneading finished. Next, after kneading sulfur and a cross-linking accelerator (CBS: N-cyclohexyl-2-benzothiazilsulfenamide and DPG: diphenylguanidine) by an open roll at 50°C, the result was taken out in a sheet shape. The obtained rubber composition was subjected to press vulcanization at 160°C for 15 minutes to produce a test piece, and respective properties were measured. The results are shown in Table 4.

Comparative Example 1

The above solid crumbs (A) were dried by an hot air at 80°C and a rubber composition (A2) having a moisture content of 0.3% was obtained. A test piece having the blending quantities in Table 3 was produced out of the obtained rubber composition (A2) in the same way as in the example 1. The respective properties were measured. The results are shown in Table 4.

[Table 3]

|  | (Part) |
|---|---|
| Rubber Composition (Solid Crumbs) | 148 |
| Silane Coupling Agent | 1.2 |
| Straric Acid | 2.0 |
| Paraffin Wax | 1.0 |
| Zinc Oxide | 3.0 |
| Antioxidant | 2.0 |
| Sulfur | 1.8 |
| Accelerator CBS | 1.7 |
| Accelerator DPG | 0.9 |

[Table 4]

| No. | Example 1 | Comparative Example 1 |
|---|---|---|
| Rubber Composition (Solid Crumbs) | A1 | A2 |

(continued)

| No. | Example 1 | Comparative Example 1 |
|---|---|---|
| tan $\delta$ -10°C | 103 | 100 |
| G'-10°C | 84 | 100 |
| tan $\delta$ 60°C | 85 | 100 |
| $\Delta$G' | 65 | 100 |
| Hardness | 98 | 100 |
| 100% Modulus | 100 | 100 |
| 300% Modulus | 109 | 100 |
| 300%/100% Modulus Ratio | 109 | 100 |

Example 2

As a device for dehydrating solid crumbs, a single-roll extruding machine, wherein the screw total length L is 890 mm, dehydrating zone is 482 mm, a compression rate in the dehydrating zone is 1.45 times, and a slit clearance is 0.25 mm, was used. A screw of the single-roll extruding machine was rotated at 100 rpm, an opening degree of an outlet cone (a clearance of a taper bush attached to the screw and an outer case outlet) is made to be 1.5 mm, and the dehydrating zone was heated at 36°C for operation.

Note that, before an operation for the example, Nipol SBR1502 (made by ZEON Corporation) as filling substance was fed in the extruding machine 2 and extruded, and the operation was stopped before all of the SBR is discharged from the outlet cone (crumb outlet) of the extruding machine 2. Then, an operation for the example below was performed.

The above solid crumbs (B) were fed from a supply inlet of the extruding machine, and dehydrated under the above condition. The temperature of a rubber composition (B1) discharged from an outlet was 74°C, and a moisture content thereof was 10.8%. The shape was a strand having a diameter of 5 mm or so and a length of 20 mm or so when discharged. The obtained rubber composition (B1) was dried by a hot air and a rubber composition (B2) having a moisture content of 0.3% was obtained. A next operation was performed on a portion not mixed with the above filling substance (SBR).

A test piece having the blending quantities in Table 5 was produced out of the obtained rubber composition (B2), and the respective properties were measured in the same way as in the example 1. The results are shown in Table 6.

Comparative Example 2

The above solid crumbs (B) were dried by an hot air at 80°C and a rubber composition (B3) having a moisture content of 0.4% was obtained. A test piece having the blending quantities in Table 5 was produced out of the obtained rubber composition (B3), and the respective properties were measured in the same way as in the example 2. The results are shown in Table 6.

[Table 5]

| | (Part) |
|---|---|
| Rubber Composition (Solid Crumbs) | 147 |
| Silane Coupling Agent | 2.0 |
| Straric Acid | 2.0 |
| Paraffin Wax | 1.0 |
| Zinc Oxide | 3.0 |
| Antioxidant | 2.0 |
| Sulfur | 1.8 |
| Accelerator CBS | 1.7 |
| Accelerator DPG | 0.9 |

[Table 6]

| No. | Example 2 | Comparative Example 2 |
|---|---|---|
| Rubber Composition (Solid Crumbs) | B2 | B3 |
| tan δ -10°C | 101 | 100 |
| G'-10°C | 92 | 100 |
| tan δ 60°C | 90 | 100 |
| ΔG' | 78 | 100 |
| Hardness | 99 | 100 |
| 100% Modulus | 98 | 100 |
| 300% Modulus | 105 | 100 |
| 300%/100% Modulus Ratio | 106 | 100 |

Example 3

By using the single-roll extruding machine used in the example 2, the above solid crumbs (C) were dehydrated in the same way. The temperature of a rubber composition (C1) discharged from an outlet was 77°C, and a moisture content thereof was 16.2%. The shape was a strand having a diameter of 5 mm or so and a length of 20 mm or so when discharged. The obtained rubber composition (C1) was dried by using the twin-roll extruding machine used in the example 1. By using a screw arranged with screw elements and kneading disks indicated below, only a drying operation was substantially performed without giving a load on the rubber composition (C1) in the dehydrating zone.
Dehydrating Zone: BBBAABBBBBBAAAABBB
Drying Zone: AAADAAABAAABEAABAAABAAAB

The screw of the extruding machine was rotated at 250 rpm. The dehydrating zone was heated to 115°C and the drying zone was heated to 145°C for the operation. Drying was performed in the same way as in the example 1. The temperature of a rubber composition (C2) discharged from the outlet was 148°C and the moisture content was 0.3%. The shape was a strand having a diameter of 5 mm or so and a length of 20 mm or so when discharged.
A test piece having the blending quantities in Table 7 was produced out of the obtained rubber composition (C2), and the respective properties were measured in the same way as in the example 1. The results are shown in Table 8.

Comparative Example 3

The above solid crumbs (C) were dried by a hot air at 80°C and a rubber composition (C3) having a moisture content of 0.4% was obtained. A test piece having the blending quantities in Table 7 was produced out of the obtained rubber composition (C3), and the respective properties were measured in the same way as in the example 3. The results are shown in Table 8.
[Table 7]

| | (Part) |
|---|---|
| Rubber Composition (Solid Crumbs) | 210.5 |
| Silane Coupling Agent | 2.0 |
| Straric Acid | 2.0 |
| Paraffin Wax | 1.0 |
| Zinc Oxide | 3.0 |

(continued)

|  | (Part) |
|---|---|
| Antioxidant | 2.0 |
| Sulfur | 1.8 |
| Accelerator CBS | 1.7 |
| Accelerator DPG | 1.6 |

[Table 8]

| No. | Example 3 | Comparative Example 3 |
|---|---|---|
| Rubber Composition (Solid Crumbs) | C2 | C3 |
| tan $\delta$ -10°C | 102 | 100 |
| G' -10°C | 82 | 100 |
| tan $\delta$ 60°C | 87 | 100 |
| $\Delta$G' | 63 | 100 |
| Hardness | 98 | 100 |
| 100% Modulus | 99 | 100 |
| 300% Modulus | 109 | 100 |
| 300%/100% Modulus Ratio | 110 | 100 |

Example 4

The above solid crumbs (D) were dehydrated by an open roll at 50°C with a clearance of 3 mm by being fed for eight times. The obtained rubber composition (D1) in a sheet shape had a moisture content of 49%. The obtained rubber composition (D1) was dried by a hot air and a rubber composition (D2) having a moisture content of 0.7% was obtained.

The obtained rubber composition (D2) was made to have a blending quantities shown in Table 9 by being added with carbon black (Seast 7HM made by Tokai Carbon Co., Ltd.), a silane coupling agent (Si69 made by Degussa), paraffin wax, stearic acid, zinc oxide (zinc oxide #1 having a particle size of 0.4 $\mu$m made by the Honjo Chemical Corporation), and an antioxidant (Nocrac 6C made by Ouchishinko Chemical Industrial Co., Ltd.) and kneaded for two minutes by using a Banbury mixer (Labo Plastomill 100C mixer type B-250 made by Toyo Seiki Seishaku-sho Ltd.). The temperature was 150°C when the kneading finished.

Next, after kneading sulfur and a cross-linking accelerator (N-cyclohexyl-2-benzothiazilsulfenamide and diphenylguanidine) by an open roll at 50°C, the result was taken out in a sheet shape. The obtained rubber composition was subjected to press vulcanization at 160°C for 15 minutes to produce a test piece, and the respective properties were measured. The results are shown in Table 10.

Comparative Example 4

The above solid crumbs (D) were dried by a hot air at 80°C and a rubber composition (D3) having a moisture content of 0.6% was obtained. A test piece having the blending quantities in Table 9 was produced out of the obtained rubber composition (D3), and the respective properties were measured in the same way as in the example 4. The results are shown in Table 10.

[Table 9]

|  | (Part) |
|---|---|
| Rubber Composition (Solid Crumbs) | 184.5 |

(continued)

| | (Part) |
|---|---|
| Carbon Black | 23 |
| Silane Coupling Agent | 3.5 |
| Straric Acid | 2.0 |
| Paraffin Wax | 1.0 |
| Zinc Oxide | 3.0 |
| Antioxidant | 2.0 |
| Sulfur | 1.8 |
| Accelerator CBS | 1.7 |
| Accelerator DPG | 0.9 |

[Table 10]

| No. | Example 4 | Comparative Example 4 |
|---|---|---|
| Rubber Composition (Solid Crumbs) | D2 | D3 |
| tan δ -10°C | 101 | 100 |
| G' -10°C | 96 | 100 |
| tan δ 60°C | 97 | 100 |
| ΔG' | 90 | 100 |
| Hardness | 100 | 100 |
| 100% Modulus | 101 | 100 |
| 300% Modulus | 104 | 100 |
| 300%/100% Modulus Ratio | 103 | 100 |

Comparative Example 5

By using the extruding machine in the example 1, the above solid crumbs (E) were fed in the same way. The temperature of a rubber composition (E1) discharged from the outlet was 151°C, the moisture content was 72%, and the form was a paste. Due to insufficient dehydration, properties were not measured.

Comparative Example 6

By using the single-roll extruding machine in the example 2, the above solid crumbs (E) were fed in the same way. The temperature of a rubber composition (E1) discharged from the outlet was 34°C, the moisture content was 79%, and the form was a paste. Due to insufficient dehydration, properties were not measured.

Comparative Example 7

By using the open roll in the example 4, the above solid crumbs (E) were fed in the same way for dehydrating, but the form becomes a paste after feeding for two times, and the operation became impossible. The moisture content was 79% at this point, and due to insufficient dehydration, properties were not measured.

Prospect

As explained above, from the examples 1 to 4, a silica-containing rubber composition obtained by dehydrating filtered solid crumbs having a moisture content of a predetermined value or less by a dehydrator having a compression function of the present invention has a large "tan $\delta$" (-10°C) and a small "G'" (-10°C), it is learnt that a road holding property on a wet pavement is excellent comparing with those of comparative examples by a dehydrating method without a compression function. Also, "tan $\delta$" (60°C) and "$\Delta$G'" are smaller comparing with those in the comparative examples, and it is learnt that silica dispersibility is excellent and a fuel efficiency is excellent.

Also, the 300% modulus is large and a ratio with the 100% modulus becomes larger comparing with those in the comparative examples, it is learnt that silica dispersibility is excellent and reinforcing properties are excellent. Furthermore, by using a drying device having a compression function in a drying step, it is learnt that these characteristics become furthermore preferable.

Since solid crumbs (E) having a moisture content of more than 80% were used in the comparative examples 5 to 7, effective dehydrating was not possible. On the other hand, since solid crumbs (A) to (D) having a moisture content of 80% or less were used in the examples 1 to 4, a dehydrating efficiency is improved and preferable dehydration was performed.

Industrial Applicability

According to the present invention, it is possible to provide a silica-containing rubber composition with improved silica dispersability, a cross-linking molding of the rubber composition, and a production method of the rubber composition.

**Claims**

1. A production method of a silica-containing rubber composition, including:

    a step (A) for mixing rubber latex and aqueous silica dispersions and obtaining a mixture of the rubber latex and silica;
    a step (B) for co-coagulating the rubber in said mixture and silica and obtaining slurry of silica-containing rubber crumbs;
    a step (C) for filtering said slurry and obtaining rubber crumbs having a moisture content of 80 wt% or less;
    a step (D) for dehydrating said filtered rubber crumbs by using a dehydrator having a compression function; and
    a step (E) of drying said dehydrated rubber crumbs.

2. The production method of a silica-containing rubber composition as set forth in claim 1, wherein an extruding machine having a barrel provided with a screw therein is used as said dehydrator.

3. The production method of a silica-containing rubber composition as set forth in claim 2, wherein said filtered rubber crumbs are dehydrated after temporarily making an inner pressure of the barrel of said extruding machine higher than that at a normal operation.

4. The production method of a silica-containing rubber composition as set forth in claim 3, wherein a part or all of a crumb outlet of said extruding machine is temporarily blocked on an initial or middle stage of an operation of said extruding machine.

5. The production method of a silica-containing rubber composition as set forth in claim 4, wherein a part or all of the crumb outlet is blocked by filling substance in said extruding machine.

6. The production method of a silica-containing rubber composition as set forth in claim 5, wherein those including at least one of rubber, resin and ice are used as said filling substance.

7. The production method of a silica-containing rubber composition as set forth in claim 1, wherein said dehydrated rubber crumbs are dried by a depressurizing operation or/and a heating operation.

8. The production method of a silica-containing rubber composition as set forth in claim 1, wherein said dehydrated rubber crumbs are dried by a compressing operation and a decompression operation.

**Patentansprüche**

1. Herstellungsverfahren für eine Silica-enthaltende Kautschukzusammensetzung, umfassend:

einen Schritt (A) zum Mischen von Kautschuklatex und wässrigen Silica-Dispersionen und Erhalten eines Gemisches aus dem Kautschuklatex und Silica;

einen Schritt (B) zum Co-Koagulieren des Kautschuks in dem Gemisch und Silica und Erhalten einer Aufschlämmung von Silica-enthaltendem Kautschukgranulat (rubber crumbs);

einen Schritt (C) zum Filtrieren der Aufschlämmung und Erhalten von Kautschukgranulat, das einen Feuchtigkeitsgehalt von 80 Gew.-% oder weniger hat;

einen Schritt (D) zum Dehydratisieren des filtrierten Kautschukgranulats unter Verwendung eines Entfeuchters mit einer Kompressionsfunktion und

einen Schritt (E) des Trocknens des dehydratisierten Kautschukgranulats.

2. Herstellungsverfahren für eine Silica-enthaltende Kautschukzusammensetzung gemäß Anspruch 1, wobei eine Extrudiermaschine mit einem Zylinder, der mit einer Schnecke darin ausgestattet ist, als Entfeuchter verwendet wird.

3. Herstellungsverfahren für eine Silica-enthaltende Kautschukzusammensetzung gemäß Anspruch 2, wobei das filtrierte Kautschukgranulat dehydratisiert wird, nachdem der Innendruck des Zylinders der Extrudiermaschine zeitweise höher als bei einem normalen Betrieb eingestellt wurde.

4. Herstellungsverfahren für eine Silica-enthaltende Kautschukzusammensetzung gemäß Anspruch 3, wobei ein Teil oder der gesamte Granulatauslass der Extrudiermaschine in einer anfänglichen oder mittleren Stufe des Betriebs der Extrudiermaschine zeitweilig blockiert wird.

5. Herstellungsverfahren für eine Silica-enthaltende Kautschukzusammensetzung gemäß Anspruch 4, wobei ein Teil oder der gesamte Granulatauslass durch Füllsubstanz in der Extrudiermaschine blockiert wird.

6. Herstellungsverfahren für eine Silica-enthaltende Kautschukzusammensetzung gemäß Anspruch 5, wobei solche, die wenigstens eins von Kautschuk, Harz und Eis umfassen, als die Füllsubstanz verwendet werden.

7. Herstellungsverfahren für eine Silica-enthaltende Kautschukzusammensetzung gemäß Anspruch 1, wobei das dehydratisierte Kautschukgranulat durch einen Betrieb bei verringertem Druck oder/und einen Erwärmungsvorgang getrocknet wird.

8. Herstellungsverfahren für eine Silica-enthaltende Kautschukzusammensetzung gemäß Anspruch 1, wobei das dehydratisierte Kautschukgranulat durch einen Betrieb unter Druck und einen Betrieb bei verringertem Druck getrocknet wird.

## Revendications

1. Procédé de production d'une composition de caoutchouc contenant de la silice, comprenant :

une étape (A) consistant à mélanger du latex de caoutchouc et des dispersions aqueuses de silice et obtenir un mélange du latex de caoutchouc et de silice ;

une étape (B) consistant à provoquer la coagulation conjointe du caoutchouc dans ledit mélange et de la silice et obtenir une pâte composée de grains de caoutchouc contenant de la silice ;

une étape (C) consistant à filtrer ladite pâte et obtenir des grains de caoutchouc ayant une teneur en humidité inférieure ou égale à 80 % ;

une étape (D) consistant à déshydrater lesdits grains de caoutchouc filtrés au moyen d'un déshydrateur ayant une fonction de compression ; et

une étape (E) consistant à faire sécher lesdits grains de caoutchouc déshydratés.

2. Procédé de production d'une composition de caoutchouc contenant de la silice selon la revendication 1, dans lequel une extrudeuse dont le cylindre est muni d'une vis est utilisée en tant que ledit déshydrateur.

3. Procédé de production d'une composition de caoutchouc contenant de la silice selon la revendication 2, dans lequel lesdits grains de caoutchouc filtrés sont déshydratés après avoir généré temporairement dans le cylindre de ladite extrudeuse une pression interne supérieure à celle d'un fonctionnement normal.

4. Procédé de production d'une composition de caoutchouc contenant de la silice selon la revendication 3, dans lequel une partie ou la totalité d'un orifice de sortie pour grains de ladite extrudeuse est temporairement bloquée lors d'une étape initiale ou intermédiaire du fonctionnement de ladite extrudeuse.

5. Procédé de production d'une composition de caoutchouc contenant de la silice selon la revendication 4, dans lequel une partie ou la totalité de l'orifice de sortie pour grains est bloquée par une substance de remplissage dans ladite extrudeuse.

6. Procédé de production d'une composition de caoutchouc contenant de la silice selon la revendication 5, dans lequel au moins un élément parmi le caoutchouc, la résine et la glace est utilisé en tant que ladite substance de remplissage.

7. Procédé de production d'une composition de caoutchouc contenant de la silice selon la revendication 1, dans lequel lesdits grains de caoutchouc déshydratés sont séchés par une opération de dépressurisation et/ou une opération de chauffage.

8. Procédé de production d'une composition de caoutchouc contenant de la silice selon la revendication 1, dans lequel lesdits grains de caoutchouc déshydratés sont séchés par une opération de compression et une opération de décompression.

F I G. 1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 4482657 A
- JP 2001213971 A
- JP 2002241507 A
- JP 10231381 A
- JP 1083522 A
- JP 62021518 A